# EUROPEAN PATENT APPLICATION

(11) **EP 4 059 697 A1**
(43) Date of publication of application: **21.09.2022**
(21) Application number: 20888425.4
(22) Date of filing: 11.11.2020
(51) Int. Cl.: B29C 64/118, B29C 64/314, B33Y 70/00

(54) **3D PRINTING FILAMENT**

(30) Priority: 12.11.2019 JP 2019204444
(71) Applicant: Mitsubishi Chemical Corporation, Chiyoda-ku Tokyo 100-8251 (JP)
(72) Inventor: YAMASUE, Nao, Tokyo 100-8251 (JP)
(74) Representative: TBK
(86) International application number: PCT/JP2020/042076
(87) International publication number: WO 2021/095769

(57) **Abstract**

The present invention relates to a filament for three-dimensional printing containing a resin composition. The resin composition contains an aromatic polyester-based resin (A), and the resin composition has a crystal melting temperature (Tm) of 200°C or more in differential scanning calorimetry and a heat quantity of crystallization (ΔHc) of 10 J/g or more and 40 J/g or less in the differential scanning calorimetry.

## Description

### TECHNICAL FIELD

The present invention relates to a filament for three-dimensional printing, a roll, a cartridge for a three-dimensional printer, and a resin molded article.

### BACKGROUND ART

At present, three-dimensional printers (hereinafter sometimes referred to as "3D printers") of various additive manufacturing technologies (e.g., the binder jetting technique, material extrusion technique, and vat photopolymerization technique) are on the market.

Of these, 3D printer systems based on the material extrusion technique (e.g., the system manufactured by Stratasys Inc., U. S.A.) are used for building a three-dimensional object layer-by-layer by extruding a flowable raw material from a nozzle part provided to an extrusion head, on the basis of a computer-aided design (CAD) model. This system is a simple system in which a raw material constituted of a thermoplastic resin is inserted into the extrusion head as a filament and continuously extruded, with being heated and melted, from the nozzle part provided to the extrusion head onto the X-Y plane platen within the chamber, and the extruded resin is deposited on and also fused to a resin deposit which has already been formed, and is integrated therewith by sodification as the extruded resin becomes cool. Therefore, the system has come to be widely used. In the material extrusion method, the extrusion step is usually repeated while the nozzle position relative to the platen rises in the Z-axis direction, which is perpendicular to the X-Y plane, thereby building a three-dimensional object akin to a CAD model (Patent Literatures 1 and 2).

Hitherto, as raw materials for the material extrusion technology, thermoplastic resins, which are amorphous or difficult to crystallize, such as acrylonitrile-butadiene-styrene resins or polylactic acid have generally been used in preference, from the standpoint of molding processability or flowability (Patent Literatures 3 to 5).

Meanwhile, in recent years, not only the above general-purpose plastics but also an engineering plastic such as a polyamide-based resin have been considered to be used as a raw material of three-dimensional printing for material extrusion technology. These are excellent in heat resistance, chemical resistance, strength, and the like. Therefore, there is a possibility of being widely used including industrial applications such as printing of a product or a manufacturing tool (Patent Literature 6).

### BACKGROUND ART LITERATURE

### PATENT LITERATURE

Patent Literature 1: JP-T-2003-502184
Patent Literature 2: JP-T-2003-534159
Patent Literature 3: JP-T-2010-521339
Patent Literature 4: JP-A-2008-194968
Patent Literature 5: WO2015/037574
Patent Literature 6: WO2018/003379

### SUMMARY OF INVENTION

### PROBLEMS THAT THE INVENTION IS TO SOLVE

As described above, the polyamide-based resin described in Patent Literature 6 is excellent in heat resistance, chemical resistance, strength, and the like. However, the polyamide-based resin has high water absorbency, and physical properties thereof change as the polyamide-based resin absorbs moisture from the air during and after printing, which is a problem that needs to be improved.

A polyester-based resin can be considered as a material that can solve the problems of the filament for three-dimensional printing formed of the polyamide-based resin. However, a filament formed of an aromatic polyester-based resin, which generally has a high crystal melting temperature (melting point, Tm) (generally exceeding 200°C), among such polyester-based resins has too rapid crystal acceleration. Therefore, there is a concern about a decrease in formability, such as a decrease in adhesiveness between layers or occurrence of warpage due to crystallization shrinkage, and it is considered that the polyester-based resin is not applicable as a printer resin used for the filament for three-dimensional printing.

The present invention is intended to solve such a problem. That is, an object of the present invention is to provide a filament for three-dimensional printing having high heat resistance, less warpage of a printed product (resin molded article) at the time of three-dimensional printing, and excellent strength of the printed product (resin molded article), and a roll, a cartridge for the three-dimensional printer, and a resin molded object which include the filament for three-dimensional printing.

### SOLUTION TO PROBLEM

As a result of intensive studies, the present inventors have completed the present invention by using a resin composition containing an aromatic polyester-based resin and having specific thermal properties for a filament for three-dimensional printing.

That is, the gist of the present invention is as follows.
[1] A filament for three-dimensional printing, containing a resin composition,
   wherein the resin composition contains an aromatic polyester-based resin (A), and
   the resin composition has a crystal melting temperature (Tm) of 200°C or higher in differential scanning calorimetry and a heat quantity of crystallization (ΔHc) of 10 J/g or more and 40 J/g or less in the differential scanning calorimetry.
[2] The filament for three-dimensional printing according to [1], wherein the aromatic polyester-based resin (A) has a structure derived from 1,4-butanediol.
[3] The filament for three-dimensional printing according to [1] or [2], wherein the resin composition contains a resin (B) containing a carbonyl group.
[4] The filament for three-dimensional printing according to [3], wherein the resin (B) is at least one resin selected from the group consisting of a polycarbonate-based resin, an amorphous polyester-based resin, and a polyetherimide-based resin.
[5] The filament for three-dimensional printing according to any one of [1] to [4], wherein a content of the aromatic polyester-based resin (A) in the resin composition is 50 mass% or more.
[6] The filament for three-dimensional printing according to any one of [1] to [5], wherein a diameter of the filament is 1.0 mm or more and 5.0 mm or less.
[7] A roll containing the filament for three-dimensional printing according to any one of [1] to [6].
[8] A cartridge for a three-dimensional printer containing the filament for three-dimensional printing according to any one of [1] to [6].
[9] A resin molded article, containing the filament for three-dimensional printing according to any one of [1] to [6].

### EFFECTS OF INVENTION

According to the present invention, it is possible to provide a filament for three-dimensional printing which is excellent in heat resistance, prevents warpage of a printed product (resin molded article) at the time of three-dimensional printing, and is excellent in strength of the printed product (resin molded article), and a roll, a cartridge for three-dimensional printer, and a resin molded article which contains the filament for three-dimensional printing.

### (Reason why present invention exhibits effects)

The reason why the present invention exhibits the effects is not clear yet, but is presumed to be as follows.

Namely, in the filament for three-dimensional printing according to the present invention, an amount of crystallization shrinkage is reduced by adjusting the thermal properties of the resin composition such as heat quantity of crystallization within a specific range. Therefore, warpage of the printed product during three-dimensional printing can be prevented, and also a crystallization rate of the resin composition during cooling after printing can be prevented. Therefore, it can be presumed that the strength of the printed product (resin molded article) in a direction perpendicular to layers can be improved when three-dimensional printing is performed.

### DESCRIPTION OF EMBODIMENTS

Hereinafter, modes for carrying out the present invention (hereinafter, referred to as "the present embodiment") will be described in detail. The present embodiment below is merely an example for describing the present invention, and the present invention is not intended to be limited to the embodiment. The present invention can be implemented with various modifications within the scope of the gist thereof.

### <Resin composition>

A resin composition used for a filament for three-dimensional printing according to the present invention contains an aromatic polyester-based resin described below, and has specific thermal properties described below.

A content of the resin composition in the filament for three-dimensional printing according to the present invention is preferably 80 mass% or more, and more preferably 90 mass% or more. The filament for three-dimensional printing according to the present invention is particularly preferably formed of the resin composition.

### (Thermal properties of resin composition)

The resin composition used for the filament for three-dimensional printing according to the present invention has a heat quantity of crystallization (ΔHc) of 10 J/g or more and 40 J/g or less, as measured by differential scanning calorimetry at a temperature decrease rate of 10°C/min. As a result, it is possible to reduce warpage of a printed product (resin molded article) due to crystallization shrinkage at the time of three-dimensional printing.

The heat quantity of crystallization (ΔHc) is preferably 38 J/g or less, more preferably 37 J/g or less, still more preferably 36 J/g or less, particularly preferably 35 J/g or less, and most preferably 34 J/g or less. From the viewpoint of heat resistance, the heat quantity of crystallization (ΔHc) is preferably 12 J/g or more, more preferably 14 J/g or more, still more preferably 16 J/g or more, yet still more preferably 18 J/g or more, particularly preferably 20 J/g or more, and most preferably 22 J/g or more.

The heat quantity of crystallization (ΔHc) can be adjusted by a composition of the resin, a blending ratio of an aromatic polyester-based resin (A) and a resin (B) containing a carbonyl group, which will be described later, and the like.

The resin composition used for the filament for three-dimensional printing according to the present invention has a crystal melting temperature (Tm) of 200°C or more, as measured by the differential scanning calorimetry at the temperature decrease rate of 10°C/min.

From the viewpoint of heat resistance, the crystal melting temperature (Tm) is preferably 205°C or higher, more preferably 210°C or higher, and most preferably 215°C or higher.

Although the upper limit thereof is not particularly limited, the crystal melting temperature (Tm) is preferably 300°C or lower, more preferably 290°C or lower, still more preferably 280°C or lower, and most preferably 270°C or lower, from the viewpoint of easy printing with a general-purpose three-dimensional printer.

The crystal melting temperature (Tm) can be adjusted by the composition of the resin, the blending ratio of the aromatic polyester-based resin (A) and the resin (B) containing a carbonyl group, which will be described later, and the like.

The resin composition used for the filament for three-dimensional printing according to the present invention preferably has a glass transition temperature (Tg) of 50°C or higher, as measured by the differential scanning calorimetry at the temperature decrease rate of 10°C/min.

From the viewpoint of heat resistance, the glass transition temperature (Tg) is more preferably 55°C or higher, still more preferably 60°C or higher, and most preferably 65°C or higher.

Although the upper limit thereof is not particularly limited, the glass transition temperature (Tg) is preferably 200°C or lower, more preferably 150°C or lower, still more preferably 140°C or lower, and most preferably 130°C or lower, from the viewpoint of ease of printing with the general-purpose three-dimensional printer.

The glass transition temperature (Tg) can be adjusted by the composition of the resin composition, the blending ratio of the aromatic polyester-based resin (A) and the resin (B) containing a carbonyl group, which will be described later, and the like.

As the resin composition used for the filament for three-dimensional printing according to the present invention, recycled products such as plastic wastes and end materials may be used.

The resin composition used for the filament for three-dimensional printing according to the present invention may be used in any form that suits the embodiment. Examples of the form of the resin composition include a pellet, a powder, a granule, and a filament. Among them, the resin composition is preferably used in the form of a filament.

### (Aromatic polyester-based resin (A))

The resin composition used for the filament for three-dimensional printing according to the present invention contains the aromatic polyester-based resin (A).

Here, the aromatic polyester-based resin (A) may be resins formed by condensation polymerization of an aromatic dicarboxylic acid component and a diol component. Among them, a resin in which one or both of the aromatic dicarboxylic acid component and the diol component are formed of a single compound is preferable.

Here, typical examples of the "aromatic dicarboxylic acid component" include terephthalic acid, isophthalic acid, naphthalenedicarboxylic acid, *etc.,* and a part of terephthalic acid may be substituted with "other dicarboxylic acid components".

At this time, examples of the "other dicarboxylic acid components" include oxalic acid, malonic acid, succinic acid, adipic acid, azelaic acid, sebacic acid, neopentyl acid, isophthalic acid, naphthalenedicarboxylic acid, diphenyl ether dicarboxylic acid, and p-oxybenzoic acid. These may be used alone or in combination of two or more, and the amount of the other dicarboxylic acids to be substituted may be appropriately selected.

Typical examples of the "diol component" include ethylene glycol, 1,2-propanediol, 1,3-butanediol, 1,4-butanediol, 1,5-pentadiol, 3-methylpentadil, 1,3-hexanediol, 1,6-hexanediol, hydrogenated bisphenol A, diethylene glycol, 1,4-cyclohexanedimethanol, triethylene glycol, polyethylene glycol, dipropylene glycol, polypropylene glycol, and polytetramethylene glycol. Among these, the aromatic polyester-based resin (A) is preferably ethylene glycol, 1,2-propanediol, 1,3-butanediol, 1,4-butanediol, 1,5-pentadiol, 3-methylpentadil, 1,3-hexanediol, 1,6-hexanediol, diethylene glycol, 1,4-cyclohexanedimethanol, triethylene glycol, or polyethylene glycol, more preferably ethylene glycol, 1,4-butanediol, 1,6-hexanediol, diethylene glycol, triethylene glycol, or polyethylene glycol, particularly preferably ethylene glycol, 1,4-butanediol, diethylene glycol, or polyethylene glycol, and most preferably one having a structure derived from 1,4-butanediol.

As the aromatic polyester-based resin (A), in order to improve physical properties such as adjustment of crystallinity, a resin obtained by copolymerizing a trace amount of a trifunctional or higher carboxylic acid component such as trimellitic acid or pyromellitic acid and/or a trifunctional or higher polyol component such as trimethylolpropane or pentaerythritol may be used.

As the aromatic polyester-based resin (A), a mixture of two or more types of aromatic polyesters may be used, or a mixture of the same resins having different polymerization degrees may be used, such that the thermal properties of the resin composition containing the aromatic polyester-based resin (A) fall within the above range.

Specific examples of such aromatic polyester-based resin (A) include a polyethylene terephthalate resin, a polypropylene terephthalate resin, a polybutylene terephthalate resin, a polyethylene isophthalate resin, a polyethylene naphthalate resin, a polybutylene naphthalate resin, and a polytrimethylene terephthalate resin.

These aromatic polyester-based resins (A) may be used alone or in combination of two or more kinds thereof.

Among the aromatic polyester-based resins (A) described above, a polyethylene terephthalate resin, a polypropylene terephthalate resin, and a polybutylene terephthalate resin are preferable, a polyethylene terephthalate resin and a polybutylene terephthalate resin are more preferable, and a polybutylene terephthalate resin is particularly preferable, from the viewpoint of obtaining the same thermal properties and mechanical properties as those of the polyamide-based resin.

Examples of the polybutylene terephthalate-based resin include commercially available products under the trade name "Novaduran (registered trademark)" series manufactured by Mitsubishi Engineering-Plastics Corporation and under the trade name "Duranex (registered trademark)" series manufactured by WinTech Polymer Ltd.

The heat quantity of crystallization (ΔHc) of the aromatic polyester-based resin (A) as measured by the differential scanning calorimetry at the temperature decrease rate of 10°C/min is preferably 70 J/g or less, more preferably 60 J/g or less, still more preferably 55 J/g or less, particularly preferably 50 J/g or less, and most preferably 45 J/g or less, from the viewpoint of formability. From the viewpoint of heat resistance, the heat quantity of crystallization (ΔHc) is preferably 10 J/g or more, more preferably 15 J/g or more, still more preferably 20 J/g or more, particularly preferably 25 J/g or more, and most preferably 30 J/g or more.

The crystal melting temperature (Tm) of the aromatic polyester-based resin (A) as measured by the differential scanning calorimetry at the temperature decrease rate of 10°C/min is preferably 180°C or higher, more preferably 190°C or higher, still more preferably 200°C or higher, and most preferably 205°C or higher, from the viewpoint of heat resistance. Although the upper limit thereof is not particularly limited, the crystal melting temperature (Tm) is preferably 300°C or lower, more preferably 270°C or lower, still more preferably 240°C or lower, and most preferably 220°C or lower, from the viewpoint of easy printing with the general-purpose three-dimensional printer.

From the viewpoint of heat resistance, the aromatic polyester-based resin (A) preferably has the glass transition temperature (Tg) of 10°C or higher, more preferably 20°C or higher, still more preferably 25°C or higher, particularly preferably 30°C or higher, and most preferably 35°C or higher, as measured by the differential scanning calorimetry at the temperature decrease rate of 10°C/min. Although the upper limit thereof is not particularly limited, the glass transition temperature (Tg) is preferably 100°C or lower, more preferably 80°C or lower, still more preferably 60°C or lower, and most preferably 40°C or lower, from the viewpoint of ease of printing with the general-purpose three-dimensional printer.

A weight average molecular weight of the aromatic polyester-based resin (A) is preferably 50,000 or more, more preferably 65,000 or more, still more preferably 80,000 or more, particularly preferably 90,000 or more, and most preferably 95,000 or more, from the viewpoint of durability of the printed product. Although the upper limit thereof is not particularly limited, the weight average molecular weight is preferably 150,000 or less, more preferably 130,000 or less, and most preferably 110,000 or less, from the viewpoint of easy printing with the general-purpose three-dimensional printer.

The resin composition used for the filament for three-dimensional printing according to the present invention preferably contains the resin (B) containing a carbonyl group, which will be described later. In the case where the resin composition used for the filament for three-dimensional printing according to the present invention contains the aromatic polyester-based resin composition (A) and the resin (B) containing a carbonyl group described later, a content of the aromatic polyester-based resin (A) in the resin composition used for the filament for three-dimensional printing according to the present invention is preferably 30 mass% or more, more preferably 40 mass% or more, still more preferably 50 mass% or more, particularly preferably 60 mass% or more, and particularly preferably 70 mass% or more, from the viewpoint of heat resistance. The content is preferably 95 mass% or less, more preferably 90 mass% or less, still more preferably 85 mass% or less, particularly preferably 80 mass% or less, and most preferably 75 mass% or less, from the viewpoint of formability.

The filament for three-dimensional printing according to the present invention may contain a filler, other resins, and other additives, which are described later. In this case, the content of the aromatic polyester-based resin (A) in the filament is not particularly limited, but is usually 50 mass% or more, more preferably 60 mass% or more, still more preferably 80 mass% or more, particularly preferably 90 mass% or more, and most preferably 95 mass% or more, from the viewpoint of excellent heat resistance and formability. The content is preferably 100 mass% or less, more preferably 99 mass% or less, still more preferably 98.5 mass% or less, and particularly preferably 98 mass% or less, from the viewpoint of the strength of the printed product and imparting other functionality.

### < Resin (B) containing carbonyl group)>

The resin composition used for the filament for three-dimensional printing according to the present invention preferably contains the resin (B) containing a carbonyl group.

The resin (B) containing a carbonyl group used in the present invention is a resin excellent in compatibility or dispersibility with the aromatic polyester-based resin (A). When the resin (B) containing a carbonyl group is compatible with or highly dispersed in the aromatic polyester-based resin (A), the filament for three-dimensional printing according to the present invention can prevent the crystallization rate of the resin composition during cooling after printing. Therefore, when the filament for three-dimensional printing according to the present invention is three-dimensionally printed, the strength of the printed product (resin molded article) in a direction perpendicular to layers can be improved. In particular, the resin (B) containing a carbonyl group is preferable because of excellent dispersibility with the aromatic polyester-based resin (A) in melt kneading.

Examples of the resin (B) containing a carbonyl group include a polycarbonate-based resin, an amorphous polyester-based resin, and a polyetherimide-based resin. As the resin (B) containing a carbonyl group, a mixture of two or more types of resins may be used, or a mixture of the same resins having different polymerization degrees may be used.

Among these, a polycarbonate-based resin and an amorphous polyester-based resin are preferable from the viewpoint of being close to a molding processing temperature of the aromatic polyester-based resin (A). In particular, it is preferable to use a polycarbonate-based resin as the resin (B) containing a carbonyl group because it is possible to impart more excellent formability to the present invention and to further improve the strength in the direction perpendicular to the layers of the three-dimensional printed product (resin molded article).

### <Polycarbonate-based resin>

Examples of the polycarbonate-based resin include those produced by reacting a dihydric phenol with a carbonate precursor such as phosgene and a carbonic acid ester compound. The polycarbonate-based resin is produced, for example, by a reaction between a dihydric phenol and a carbonate precursor such as phosgene in a solvent such as methylene chloride. The polycarbonate-based resin can be obtained by, for example, an ester exchange reaction between a dihydric phenol and a carbonate precursor such as a carbonate ester compound in the presence or absence of a solvent.

Examples of the dihydric phenol include bis(4-hydroxyphenyl) alkane-based compounds such as 2,2-bis(4-hydroxyphenyl) propane (bisphenol A), bis(4-hydroxyphenyl) methane, 1,1-bis(4-hydroxyphenyl) ethane, 2,2-bis(4-hydroxy-3,5-dimethylphenyl) propane, and 2,2-bis(4-hydroxy-3-methylphenyl) propane, bis(4-hydroxyphenyl) sulfide, bis(4-hydroxyphenyl) sulfone. Among these, as the dihydric phenol, bis(4-hydroxyphenyl) alkane-based compounds and bisphenol A are preferable. These dihydric phenols may be used alone or as a mixture of two or more types thereof.

As the carbonate precursor, a carbonyl halide, a carbonyl ester, a haloformate, or the like is used. Examples of the carbonate precursor include phosgene, diphenyl carbonate, dihaloformate of dihydric phenol, and a mixture thereof.

As the polycarbonate-based resin, a homopolymer using one type of dihydric phenol may be used, or a copolymer using two or more types of dihydric phenols may be used. Furthermore, the polycarbonate-based resin may be a thermoplastic randomly branched polycarbonate-based resin obtained by using a polyfunctional aromatic compound in combination with a dihydric phenol. Further, the polycarbonate-based resin may be a mixture of two or more types of various polycarbonate-based resins.

Typical examples of the polycarbonate-based resin include commercially available products such as "Iupilon (registered trademark)" series (trade name) manufactured by Mitsubishi Engineering-Plastics Corporation and "SD POLYCA^{™} (registered trademark)" series (trade name) manufactured by Sumika Polycarbonate Ltd.

### <Amorphous polyester-based resin>

The amorphous polyester-based resin refers to a polyester-based resin which does not show a clear melting peak at the time of a second temperature increase when the temperature is increased from -50°C to 300°C at a heating rate of 10°C/min, maintained at 300°C for 1 minute, then decreased to -50°C at a cooling rate of 10°C/min, maintained at -50°C for 1 minute, and then increased again to 300°C at the heating rate of 10°C/min, by a differential scanning calorimeter (DSC) in accordance with JIS K7121.

The acid component of the amorphous polyester-based resin contains terephthalic acid as a main component, and the diol component contains ethylene glycol as a main component. The diol component contains a copolymerization component other than ethylene glycol in a range of 1 mol% or more, preferably 15 mol% or more, and more preferably 25 mol% or more, and contains a copolymerization component other than ethylene glycol in a range of 49 mol% or less, and preferably 45 mol% or less.

As for other acid components and diol components which can be copolymerized, examples of the other acid components include aromatic dicarboxylic acid components derived from isophthalic acid, 2-chloroterephthalic acid, 2,5-dichloroterephthalic acid, 2-methylterephthalic acid, 4,4-stilbene dicarboxylic acid, 4,4-biphenyl dicarboxylic acid, orthophthalic acid, 2,6-naphthalene dicarboxylic acid, 2,7-naphthalene dicarboxylic acid, bisbenzoic acid, bis(p-carboxyphenyl) methane, anthracene dicarboxylic acid, 4,4-diphenyl ether dicarboxylic acid, 4,4-diphenoxyethane dicarboxylic acid, 5-Na sulfoisophthalic acid, ethylene-bis-p-benzoic acid, and the like, and aliphatic dicarboxylic acid components derived from adipic acid, sebacic acid, azelaic acid, dodecanedioic acid, 1,3-cyclohexane dicarboxylic acid, 1,4-cyclohexane dicarboxylic acid, and the like. Among these, aromatic dicarboxylic acid components such as isophthalic acid and 2,6-naphthalenedicarboxylic acid are preferable.

The diol component is preferably at least one selected from the group consisting of diethylene glycol, trans-tetramethyl-1,3-cyclobutanediol, 2,2,4,4-tetramethyl-1,3-cyclobutanediol, 1,4-butanediol, 1,4-cyclohexanedimethanol, 1,3-cyclohexanedimethanol, 1,4-cyclohexanediol, 1,3-cyclohexanediol, spiroglycol, and polytetramethylene glycol. In particular, a diol component having at least one alicyclic structure selected from the group consisting of trans-tetram ethyl-1,3-cyclobutanediol, 2,2,4,4-tetramethyl-1,3-cyclobutanediol, 1,4-cyclohexanedimethanol, 1,3-cyclohexanedimethanol, 1,4-cyclohexanediol, 1,3-cyclohexanediol, and spiroglycol is preferably used. From the viewpoints of economic efficiency, industrial availability, and the like, 1,4-cyclohexanedimethanol and spiroglycol are particularly preferable.

Here, a content of the diol component having an alicyclic structure is 1 mol% or more, preferably 15 mol% or more, and more preferably 25 mol% or more in all of the diol components of the amorphous polyester-based resin, and the upper limit thereof is preferably 49 mol% or less, and more preferably 45 mol% or less.

When the content of the diol component having an alicyclic structure is within the above range, a resin can be obtained which does not show a clear melting peak at the time of a second temperature increase when the temperature is increased from -50°C to 300°C at a heating rate of 10°C/min, maintained at 300°C for 1 minute, then decreased to -50°C at a cooling rate of 10°C/min, maintained at -50°C for 1 minute, and then increased again to 300°C at a heating rate of 10°C/min, using DSC and in accordance with JIS K7121.

Examples of commercially available products of the amorphous polyester-based resin include "SKYGREEN (registered trademark)" (manufactured by SK Chemicals Co., Ltd.), "Eastar Copolyester (registered trademark)" (manufactured by Eastman Chemical Company), "TRITAN (registered trademark)" (manufactured by Eastman Chemical Company), and "ALTESTER (registered trademark)" (manufactured by Mitsubishi Gas Chemical Company, Inc.).

### <Polyetherimide-based resin>

Specifically, the polyetherimide-based resin preferably has a structure represented by the following Formula (1), from the viewpoint of excellent balance between heat resistance and moldability.

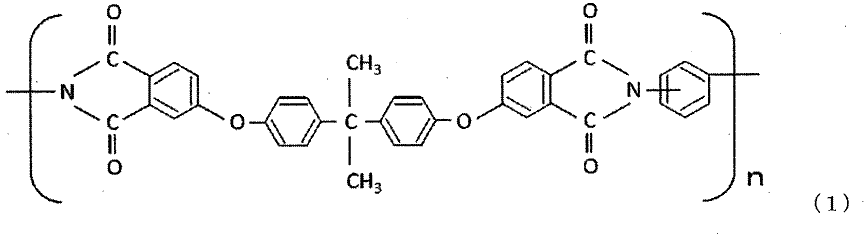

In Formula (1), n (the number of repetitions) is usually an integer in a range of 10 to 1,000, and preferably 10 to 500. When n is in such a range, the polyetherimide-based resin is excellent in balance between moldability and heat resistance.

The above Formula (1) can be classified into a structure represented by the following Formula (2) and a structure represented by the following Formula (3) based on a difference in a binding mode, specifically, a difference between a binding in the meta-position and a binding in the para-position.

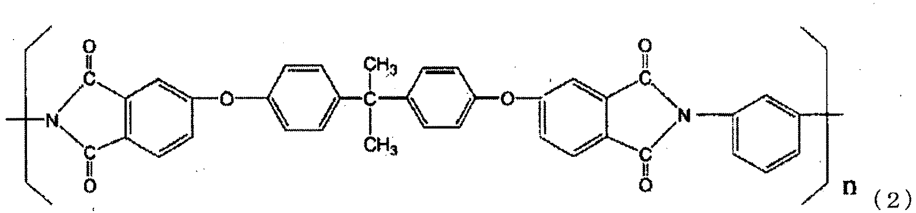

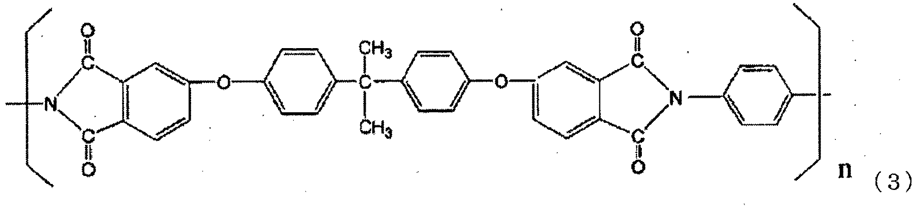

In the above Formulae (2) and (3), n (the number of repetitions) is usually an integer in a range of 10 to 1,000, and preferably 10 to 500. When n is in such a range, the polyetherimide-based resin is excellent in balance between moldability and heat resistance.

Examples of commercially available products of the polyetherimide-based resin having such a structure include "Ultem (registered trademark)" (trade name) manufactured by SABIC Innovative Plastics Co., Ltd.

From the viewpoint of heat resistance, the content of the resin (B) containing a carbonyl group in the resin composition used for the filament for three-dimensional printing according to the present invention is preferably less than 70 mass%, more preferably less than 60 mass%, still more preferably less than 50 mass%, and yet still more preferably less than 45 mass%. In addition, the content is preferably more than 5 mass%, more preferably more than 10 mass%, still more preferably more than 15 mass%, particularly preferably more than 20 mass%, and most preferably more than 25 mass%, from the viewpoint of formability.

From the viewpoint of heat resistance, the resin (B) containing a carbonyl group used in the filament for three-dimensional printing according to the present invention preferably has a glass transition temperature (Tg) of 20°C or higher, more preferably 40°C or higher, still more preferably 50°C or higher, yet still more preferably 60°C or higher, particularly preferably 70°C or higher, and most preferably 75°C or higher, as measured by the differential scanning calorimetry at the temperature decrease rate of 10°C/min. Although the upper limit thereof is not particularly limited, the glass transition temperature (Tg) is preferably 220°C or lower, more preferably 200°C or lower, still more preferably 150°C or lower, particularly preferably 100°C or lower, and most preferably 80°C or lower, from the viewpoint of easy printing by the general-purpose three-dimensional printer.

The resin (B) containing a carbonyl group used in the filament for three-dimensional printing according to the present invention preferably has a weight average molecular weight of 10,000 or more, more preferably 15,000 or more, still more preferably 20,000 or more, particularly preferably 24,000 or more, and most preferably 28,000 or more, from the viewpoint of durability of a printed product. Although the upper limit thereof is not particularly limited, the weight average molecular weight is preferably 110,000 or less, more preferably 85,000 or less, still more preferably 60,000 or less, particularly preferably 40,000 or less, and most preferably 30,000 or less, from the viewpoint of easy printing by the general-purpose three-dimensional printer.

### (Other components)

The filament for three-dimensional printing according to the present invention may contain a filler (organic particles, inorganic particles, reinforcing material, and the like), other resins, and other components to an extent that the effect of the present invention is not impaired. The filler (organic particles, inorganic particles, reinforcing material, and the like) will be described in detail below. Examples of the other resins include a polyolefin-based resin, a polystyrene-based resin, a polyester-based resin other than the aromatic polyester-based resin (A), and various elastomers. These may be used alone or in combination of two or more types of them. A blending amount of the other resins in the filament for three-dimensional printing according to the present invention is usually 50 mass% or less, and preferably 30 mass% or less.

Examples of the other components include a heat resistance agent, an ultraviolet absorber, a light stabilizer, an antioxidant, an antistatic agent, a lubricant, a slip agent, a crystal nucleating agent, a tackifier, a sealability improver, an antifogging agent, a release agent, a plasticizer, a pigment, a dye, a fragrance, and a flame retardant. These may be used alone or in combination.

Specific examples of the organic particles of the filler include acrylic resin particles and melamine resin particles.

Specific examples of the inorganic particles of the filler include silica, alumina, kaolin, titanium dioxide, calcium carbonate, magnesium carbonate, zinc carbonate, calcium stearate, magnesium stearate, and zinc stearate.

Specific examples of the reinforcing material of the filler include inorganic fillers and inorganic fibers.

Specific examples of the inorganic filler include calcium carbonate, zinc carbonate, magnesium oxide, calcium silicate, sodium aluminate, calcium aluminate, sodium aluminosilicate, magnesium silicate, potassium titanate, glass balloons, glass flakes, glass powders, silicon carbide, silicon nitride, boron nitride, gypsum, calcined kaolin, zinc oxide, antimony trioxide, zeolite, hydrotalcite, wollastonite, silica, talc, metal powders, alumina, graphite, carbon black, and carbon nanotube.

Specific examples of the inorganic fiber include glass cut fibers, glass milled fibers, glass fibers, gypsum whiskers, metal fibers, metal whiskers, ceramic whiskers, carbon fibers, and cellulose nanofibers.

Here, when the filament for three-dimensional printing according to the present invention contains the filler, a content of the filler in the filament for three-dimensional printing according to the present invention is not particularly limited, but is preferably 1 mass% or more, more preferably 5 mass% or more, and still more preferably 10 mass% or more, from the viewpoint of the strength of the resin molded article to be printed. In addition, the content is preferably 50 mass% or less, more preferably 40 mass% or less, and still more preferably 30 mass% or less, from the viewpoint of preventing a decrease in interlayer adhesiveness of the resin molded article to be printed.

### <Filament for three-dimensional printing>

The filament for three-dimensional printing according to the present invention may be used as either a printing material or a support material, which is roughly classified as a raw material used in a material extrusion method, but is preferably used as a printing material. An object serving as a printed product main body is a printing material, and an object which supports the laminated printing material until the printing material is solidified into a desired shape is a support material.

### <Method for producing filament for three-dimensional printing>

The filament for three-dimensional printing according to the present invention is produced using the resin composition described above. The mixing method for obtaining the resin composition is not particularly limited. Known methods, for example, melt-kneading devices such as a single-screw extruder, a multi-screw extruder, a Banbury mixer, or a kneader can be used. In the present invention, it is preferable to use a same-direction twin-screw extruder, from the viewpoints of dispersibility and miscibility of each component. When the dispersibility and miscibility are excellent, the accuracy of the filament diameter and the circularity can be increased, which is preferable.

The method for producing the filament for three-dimensional printing according to the present invention is not particularly limited. Examples thereof include a method of molding the resin composition described above by a known molding method such as extrusion molding, or a method of forming a filament as it is during the production of the resin composition. For example, when the filament for three-dimensional printing according to the present invention is obtained by the extrusion molding, the conditions thereof are appropriately adjusted depending on the flow characteristics, molding processability, and the like of the resin composition to be used, but are usually 220°C to 300°C, and preferably 250°C to 280°C.

### <Physical properties of filament for three-dimensional printing>

A diameter of the filament for three-dimensional printing according to the present invention depends on the specification of a system used for molding a resin molded article by a material extrusion method, but is usually 1.0 mm or more, preferably 1.5 mm or more, more preferably 1.6 mm or more, and particularly preferably 1.7 mm or more. Meanwhile, the upper limit is usually 5.0 mm or less, preferably 4.0 mm or less, more preferably 3.5 mm or less, and particularly preferably 3.0 mm or less.

Further, it is preferable that the filament should have an accuracy in a filament diameter of within ±5% with respect to any measuring point on the filament, from the viewpoint of the stability of the raw material feeding. In particular, in the filament for three-dimensional printing according to the present invention, a standard deviation in a diameter of the filament is preferably 0.07 mm or less, and particularly preferably 0.06 mm or less.

The circularity of the filament for three-dimensional printing according to the present invention is preferably 0.93 or more, and particularly preferably 0.95 or more. The upper limit of the circularity is 1.0. Thus, in the case of a filament for three-dimensional printing having a small standard deviation in a diameter of the filament and a high circularity, discharge unevenness during printing can be prevented and a resin molded article excellent in appearance and surface properties can be stably produced. When using the resin composition described above, a filament for three-dimensional printing satisfying such standard deviation and circularity can be produced relatively easily.

### <Roll of filament for three-dimensional printing>

When a resin molded article is produced by a three-dimensional printer using the filament for three-dimensional printing according to the invention, it is required to stably store the filament for three-dimensional printing and to stably supply the filament for three-dimensional printing to the three-dimensional printer. It is hence preferable that the filament for three-dimensional printing according to the invention is packaged, as a roll obtained by winding the filament on a bobbin or that the roll is housed in a cartridge, from the standpoints of long-term storage, stable drawing-out, protection against environmental factors including ultraviolet, prevention of twisting, *etc.*

Examples of the cartridge include one which not only contains the roll obtained by winding the filament on a bobbin but also uses a vapor proofing material or moisture absorbent inside and which has a structure in which at least the parts other than the orifice part for drawing out the filament is sealed.

Either a roll obtained by winding the filament for three-dimensional printing on a bobbin or a cartridge including the roll is usually installed in or around the three-dimensional printer, and the filament is always continuously introduced from the cartridge into the three-dimensional printer during molding.

### <Method for producing resin molded article>

In the method for producing a resin molded article according to the present invention, a resin molded article is obtained by using the filament for three-dimensional printing of the present invention and by molding with a three-dimensional printer. Examples of the molding method with a three-dimensional printer include a material extrusion method (ME method), a powder sintering method, an inkjet method, and a stereolithography method (SLA method), and the filament for a three-dimensional printer according to the present invention is particularly preferably used for the material extrusion method. Hereinafter, the case of the material extrusion method will be described as an example.

The filament for three-dimensional printing according to the present invention may be used as either a printing material or a support material, which is roughly classified as a raw material used in a material extrusion method, but is preferably used as a printing material. An object serving as a printed product main body is a printing material, and an object which supports the laminated printing material until the printing material is solidified into a desired shape is a support material.

The three-dimensional printer used in the material extrusion method generally includes a chamber, and is equipped, within the chamber, with a heatable platen, an extrusion head installed on a gantry structure, a heating/melting vessel, and a raw material supply part including a filament guide or filament cartridge installed part, *etc.* Some three-dimensional printers have a configuration in which the extrusion head and the heating/melting vessel have been integrated together.

Since the extrusion head has been installed on the gantry structure, the extrusion head can be optionally moved over the X-Y plane of the platen. The platen is a platform for building thereon a desired three-dimensional object, supporting material, *etc.* It is preferable that the platen has been configured so that the platen is heated or thermally insulated to thereby obtain adhesiveness to the deposit or to enable the resultant resin molded article to have improved dimensional stability as a desired three-dimensional object. In addition, in order to improve the adhesiveness to the deposit, an adhesive glue may be coated to the platen, or a sheet or the like having good adhesiveness to the deposit may be attached. Here, examples of the sheet having good adhesiveness to the deposit include a sheet having fine irregularities on the surface such as inorganic fiber sheets, and a sheet formed of a resin of the same type as that of the deposit. Usually, the extrusion head and/or the platen is movable in the Z-axis direction, which is perpendicular to the X-Y plane.

The number of extrusion heads is usually 1 or 2. When there are two extrusion heads, two different polymers can be melted in different heads and selectively printed. In this case, one of the polymers may be a printing material for printing a 3D object, and the other may be, for example, a support material required as a temporary equipment. The supporting material can be removed thereafter, for example, by complete or partial dissolution in an aqueous system (for example, a basic or acidic medium).

The filament for three-dimensional printing is drawn out from the raw material supply part, sent to the extrusion head with a pair of opposed rollers or gears, heated and melted in the extrusion head, and extruded from the nozzle at the end. With changing a position thereof in accordance with signals sent on the basis of a CAD model, the extrusion head supplies the raw material to the platen and deposits the raw material layer-by-layer. After this step has been completed, the lamination deposit is taken out from the platen, and the supporting material or the like is removed according to need and unnecessary portions are cut off, and a resin molded article as the desired three-dimensional object can thereby be obtained.

Examples of means for continuously supplying a raw material to the extrusion head include a method in which a filament or a fiber is drawn out and supplied; a method in which a powder or a liquid is supplied from a tank or the like via a weigh-feeder; and a method in which pellets or granules are plasticated with an extruder or the like and this material is extruded and supplied. Most preferred of these is the method in which a filament is drawn out and supplied, that is, the method in which the filament for three-dimensional printing according to the invention described above is drawn out and supplied, from the standpoints of step simplicity and supply stability.

In a method generally used in the case of supplying a filament to a three-dimensional printer, the filament is engaged with driving rolls, e.g., nip rolls or gear rolls, and supplied to the extrusion head with being drawn out. From the standpoint of enhancing the gripping of the filament by the engagement between the filament and the driving rolls to thereby stabilize the supply of the raw material, it is preferred to transfer minute irregularities beforehand to the surface of the filament or to incorporate an ingredient for increasing the resistance of friction with the engaging parts, such as an inorganic additive, spreading agent, pressure-sensitive adhesive, or rubber. When the filament has an uneven thickness, the filament may not be gripped by the engagement with the drive roll, and the driving roll may idle and the filament may not be supplied to the extrusion head.

For the filament for three-dimensional printing for use in the present invention, the temperature for obtaining flowability suitable for extrusion is generally about 180°C to 300°C, which is a temperature which can be set by a general three-dimensional printer. In the method for producing a resin molded article according to the present invention, the temperature of the heat extrusion head is set at usually 290°C or lower, preferably 200°C to 280°C, and the temperature of the platen is set at usually 120°C or lower. Thus, a resin molded article can be stably produced.

The temperature (discharge temperature) of the molten resin which is extruded from the extrusion head is preferably 220°C or higher, and more preferably 250°C or higher. Meanwhile, the temperature thereof is preferably 300°C or lower, more preferably 290°C or lower, and still more preferably 280°C or lower. Molten-resin temperatures not lower than the lower limit are preferred from the standpoint of extruding resins having high heat resistance, and the resin tends to be extruded at a high speed to improve the efficiency of printing. Meanwhile, in cases when the temperature of the molten resin is not higher than the upper limit, it is easy to prevent the resin from causing a trouble such as pyrolysis, burning, smoking, odor emission, or stickiness. Such temperatures are preferred also from the standpoint of avoiding the trouble that fragments formed by thinly elongating the molten resin, which are generally called stringiness, or bulks of the excess resin, which are called lumps, adhere to the resin molded article to impair the appearance.

It is preferable that the molten resin which is extruded from the extrusion head is in the shape of a strand having a diameter of preferably 0.01 mm to 1.0 mm, more preferably 0.02 mm to 0.5 mm. This is because the molten resin extruded in such a shape tends to bring satisfactory reproducibility of a CAD model.

The high-speed printing in the three-dimensional printing using the filament for three-dimensional printing according to the present invention means that a printing speed is 1 mm/s or more. From the viewpoint of the time required for printing, the printing speed is preferably 3 mm/s or more, more preferably 5 mm/s or more, still more preferably 7 mm/s or more, and most preferably 10 mm/s or more. Although the upper limit thereof is not particularly limited, the printing speed is preferably as fast as possible. It is noted that in order to achieve a speed at which there is no problem in formability, such as bending of the filament described above or deterioration of the appearance described below, the printing speed is preferably 100 mm/s or less, more preferably 80 mm/s or less, and still more preferably 60 mm/s or less.

In the case of producing the resin molded article by the three-dimensional printer using the filament for three-dimensional printing, when a resin molded article is made with laminating the strand-shaped resin discharged from the extrusion head, irregularities (such as streaks) may occur on the surface of the molded product due to insufficient adhesiveness between the previously discharged resin strand and the resin strand discharged thereon, or due to discharge unevenness. When such irregularities are present on the surface of the molded product, there are problems that not only the appearance may be deteriorated, but also the resin molded article may be easily damaged.

The filament for three-dimensional printing according to the present invention has good adhesiveness between the previously discharged resin strand and the resin strand discharged thereon, and has a high circularity of the diameter, so that the discharge unevenness at the time of molding is prevented, and a resin molded article excellent in appearance, surface properties, and the like can be stably produced.

When a resin molded article is made with laminating the strand-shaped resin discharged from the extrusion head by the three-dimensional printer, a step of stopping the discharge of the resin and then moving the nozzle to a laminated position in the next step is included. At the time, the resin may not be interrupted, and a fine resin fiber is generated and remains on the surface of the resin molded article like string. When such stringiness occurs, problems such as deterioration in the appearance of the resin molded article may occur.

The filament for three-dimensional printing according to the present invention has a moderate crystallization rate and a high breaking strain, in addition to excellent molding processability due to specific thermal properties, a small standard deviation in a diameter and a high circularity, so that it is possible to stably produce a resin molded article in which stringiness is prevented and which is excellent in appearance and surface properties.

In the resin molded article according to the present invention, depending on the intended use, crystallization may be promoted or completed by a heat treatment after printing.

In the production of the resin molded article according to the present invention, the support material may be printed at the same time. The type of the support material is not particularly limited, and examples of the composition of commercially available support material filaments include an ethylene-vinyl alcohol copolymer resin (EVOH), a butenediol vinyl alcohol copolymer resin (BVOH), a polyvinyl alcohol (PVOH), and high-impact polystyrene (HIPS).

### (Application of resin molded article)

The resin molded article of the present invention is excellent in formability and heat resistance. The application thereof is not particularly limited, and the resin molded product can be suitably used for applications, for example, stationery; toys; covers of cell phones, smartphones, *etc.*; parts such as a grip; school teaching materials; home electric appliances or OA equipment; parts for automobiles, motorcycles, bicycles, *etc.*; electric/electronic devices; materials for agriculture; materials for gardening; materials for fisheries; materials for civil engineering/construction; and medical supplies.

### Examples

Hereinafter, although the present invention will be described in more detail with reference to Examples, the present invention is not limited thereto at all. Various measurement values and evaluations indicated in this description were performed as follows.

### (1) Heat quantity of crystallization (ΔHc)

About 10 mg of a sample was heated from 0°C to 250°C at a heating rate of 10°C/min and maintained at the temperature for 1 minute, in accordance with JIS K7122 using a differential scanning calorimeter "Pyris1 DSC" (trade name) manufactured by PerkinElmer Co., Ltd. Thereafter, a heat quantity of crystallization (ΔHc) (temperature decreasing process) was determined from the thermogram measured when the temperature was decreased to 0°C at a cooling rate of 10°C/min.

### (2) Crystal melting temperature (Tm) and glass transition temperature (Tg)

About 10 mg of a sample was heated from 0°C to 250°C at a heating rate of 10°C/min and maintained at the temperature for 1 minute, in accordance with JIS K7121 using a differential scanning calorimeter "Pyris1 DSC" (trade name) manufactured by PerkinElmer Co., Ltd. Thereafter, the temperature was decreased to 0°C at a cooling rate of 10°C/min, and a crystal melting temperature (Tm) (°C) (temperature reincreasing process) and a glass transition temperature (Tg) (°C) (temperature reincreasing process) were determined from each thermogram measured when the temperature was increased again to 250°C at a heating rate of 10°C/min.

### (3) Printing evaluation of filament for three-dimensional printing

### <Warpage during printing>

As an evaluation sample, a dumbbell-shaped sample having a sample length of 75 mm, a width of 10 mm, and a thickness of 5 mm was printed using a 3D printer (manufactured by 3DGence, trade name: INDUSTRY F340) with a thickness direction of the sample as the Z-axis direction (laminating direction). At that time, BVOH was used as a support material, and printing was performed under printing conditions of a print bed temperature of 65°C, a nozzle temperature of 265°C, a printing speed of 7 mm/s, and an internal filling rate of 100%.

After producing the evaluation sample, the evaluation sample is removed from the print bed, distances between four corners of the evaluation sample and a horizontal plane when the evaluation sample is placed on the horizontal plane were measured, and an average value of the obtained values was taken as an amount of warpage. From this amount of warpage, warpage at the time of printing was evaluated according to the following criteria.

AA: The amount of warpage was less than 1 mm.
A: The amount of warpage was 1 mm or more and less than 2 mm.
B: The amount of warpage was 2 mm or more, or large warpage was occurred during printing, and therefore printing could not be completed.

### <Heat Resistance>

As an evaluation sample, a cylindrical sample having a diameter of 5 cm, a height of 4 cm, and a single wall layer was printed using a 3D printer (manufactured by 3DGence, trade name: INDUSTRY F340) with a brim of 5 mm attached. In this case, BVOH was used as a support material, and printing was performed under printing conditions of a print bed temperature of 65°C, a nozzle temperature of 265°C, a printing speed of 7 mm/s, and an internal filling rate of 100%.

After producing the evaluation sample, the evaluation sample was removed from the print bed and heated in an oven at 200°C for 1 minute. Thereafter, the diameter of the uppermost portion of the evaluation sample was measured, and the deformation amount from the diameter before printing was investigated. From this deformation amount, the heat resistance of the printed product was evaluated according to the following criteria.

AA: The deformation amount was ±3 mm or less.
A: The deformation amount was less than ±5 mm.
B: The deformation amount was ±5 mm or more, or large warpage was occurred during printing, and therefore printing could not be completed.

### <Interlayer adhesiveness>

The tensile elongation at break was measured and evaluated in accordance with JIS K7161. As an evaluation sample, a dumbbell-shaped sample having a sample length of 75 mm, a width of 10 mm, and a thickness of 5 mm was printed using a 3D printer (manufactured by 3DGence, trade name: INDUSTRY F340) with a length direction of the sample as the Z-axis direction (laminating direction). In this case, BVOH was used as a support material, and printing was performed under printing conditions of a print bed temperature of 65°C, a nozzle temperature of 265°C, a printing speed of 7 mm/s, and an internal filling rate of 100%.

This evaluation sample was subjected to a tensile test at an initial chuck distance of 45 mm, a speed of 50 mm/min, and 23°C to measure the tensile strength.

The interlayer adhesiveness of the printed product can be evaluated by a ratio to the tensile strength of a sample obtained by electrothermal pressing of the filament for three-dimensional printing according to the present invention at 250°C. From this ratio, interlayer adhesiveness was evaluated according to the following criteria.

AA: The ratio was 30% or more.
A: The ratio was 15% or more and less than 30%.
B: The ratio was less than 15%, or large warpage was occurred during printing, and therefore printing could not be completed.

### <Comprehensive evaluation>

Based on the results of the evaluation of warpage during printing, the results of the evaluation of heat resistance, and the results of the evaluation of interlayer adhesiveness, comprehensive evaluation was performed according to the following criteria.

AA: The above three results were all "AA".
A: One of the above three results was "A". It was noted that none of the above three results were "B".
B: All of the above three results were "B", or any two or more of the above three results were "A".

Raw materials used in Examples and Comparative Examples are described below.

### <Aromatic polyester-based resin (A)>

(A-1) Novaduran 5020 (aromatic polyester, Tm: 228°C, ΔHc: 47 J/g, Tg: 43°C, weight average molecular weight: 98,200) manufactured by Mitsubishi Engineering-Plastics Corporation

### < Resin (B) containing carbonyl group >

(B-1) Iupilon S3000 (polycarbonate, Tg: 147°C, weight average molecular weight: 29,500) manufactured by Mitsubishi Engineering-Plastics Corporation

(B-2) SKYGREEN S2008 (amorphous polyester, Tg: 72°C, weight average molecular weight: 84,100) manufactured by SK Chemicals Co., Ltd.

### Example 1

After blending 60 parts by mass of the aromatic polyester-based resin (A-1) and 40 parts by mass of the resin (B-1), a resin composition was produced at a kneading temperature of 250°C using a same-direction twin-screw kneader. The polyester-based resin composition was extruded from a nozzle having a diameter of 2.5 mm at a melting temperature of 250°C using a single-screw extruder, and then cooled in cooling water at 40°C to obtain a filament having a diameter of 1.75 mm. Various evaluation results of the filament are shown in Table 1.

### Example 2

A filament was produced in the same manner as in Example 1 except that the resin (B-1) was changed to the resin (B-2). Various evaluation results of the filament are shown in Table 1.

### Comparative Example 1

A filament was produced in the same manner as in Example 1, except that only the aromatic polyester-based resin (A-1) was used in the production of the resin composition. Various evaluation results of the filament are shown in Table 1.

### Comparative Example 2

A filament was produced in the same manner as in Example 1 except that 40 parts by mass of the aromatic polyester-based resin (A-1) and 60 parts by mass of the resin (B-1) were used. Various evaluation results of the filament are shown in Table 1.

### [Table 1]

**Table 1**

| (parts by mass) | | | | | |
|---|---|---|---|---|---|
| | | Example | | Comparative example | |
| | | 1 | 2 | 1 | 2 |
| Aromatic polyester-based resin (A) | A-1 | 60 | 60 | 100 | 40 |
| Resin (B) | B-1 | 40 | - | - | 60 |
| | B-2 | - | 40 | - | - |
| Evaluation of filament for three-dimensional printing | ΔHc (J/g) | 32 | 32 | 47 | 7 |
| | Tm (°C) | 219 | 223 | 228 | 219 |
| | Tg (°C) | 80 | - | 43 | 82 |
| Evaluation of printed product | Warpage during printing | AA | AA | B | A |
| | Heat resistance | AA | AA | B | A |
| | Interlayer adhesiveness | AA | A | B | AA |
| Comprehensive evaluation | | AA | A | B | B |

As can be confirmed from Table 1, the filaments for three-dimensional printing formed of the resin composition having specific thermal properties specified in the present invention were excellent in all evaluations for the obtained resin molded article. In particular, the filament for three-dimensional printing containing the aromatic polyester-based resin and the polycarbonate-based resin shown in Example 1 was further excellent in the interlayer adhesiveness of the printed product.

On the contrary, as can be confirmed from Comparative Example 1, when the heat quantity of crystallization (ΔHc) was larger than the range specified in the present invention, the warpage at the time of printing due to the crystallization shrinkage was large, and the formability and the interlayer adhesiveness were inferior. On the other hand, as can be confirmed from Comparative Example 2, when the heat quantity of crystallization (ΔHc) was less than the range specified in the present invention, the interlayer adhesiveness was good, while the warpage and the heat resistance were inferior.

Although the present invention has been described in detail using specific embodiments, it will be apparent to those skilled in the art that various changes and modifications are possible without departing from the spirit and scope of the present invention. The present application is based on a Japanese Patent Application No. 2019-204444 filed on November 12, 2019, the contents of which are incorporated herein by reference.

## Claims

1. A filament for three-dimensional printing, comprising a resin composition, wherein the resin composition contains an aromatic polyester-based resin (A), and the resin composition has a crystal melting temperature (Tm) of 200°C or higher in differential scanning calorimetry and a heat quantity of crystallization (ΔHc) of 10 J/g or more and 40 J/g or less in the differential scanning calorimetry.

2. The filament for three-dimensional printing according to claim 1, wherein the aromatic polyester-based resin (A) has a structure derived from 1,4-butanediol.

3. The filament for three-dimensional printing according to claim 1 or 2, wherein the resin composition contains a resin (B) containing a carbonyl group.

4. The filament for three-dimensional printing according to claim 3, wherein the resin (B) is at least one resin selected from the group consisting of a polycarbonate-based resin, an amorphous polyester-based resin, and a polyetherimide-based resin.

5. The filament for three-dimensional printing according to any one of claims 1 to 4, wherein a content of the aromatic polyester-based resin (A) in the resin composition is 50 mass% or more.

6. The filament for three-dimensional printing according to any one of claims 1 to 5, wherein a diameter of the filament is 1.0 mm or more and 5.0 mm or less.

7. A roll comprising the filament for three-dimensional printing according to any one of claims 1 to 6.

8. A cartridge for a three-dimensional printer comprising the filament for three-dimensional printing according to any one of claims 1 to 6.

9. A resin molded article, comprising the filament for three-dimensional printing according to any one of claims 1 to 6.
